# EUROPEAN PATENT APPLICATION

(11) **EP 4 567 322 A1**
(43) Date of publication of application: **11.06.2025**
(21) Application number: 23849950.3
(22) Date of filing: 25.07.2023
(51) Int. Cl.: F17D 1/04, F17D 3/10

(54) **HYDROGEN SUPPLY AND DEMAND MANAGEMENT METHOD AND HYDROGEN SUPPLY AND DEMAND MANAGEMENT DEVICE**

(30) Priority: 03.08.2022 JP 2022123904
(71) Applicant: Hitachi, Ltd., Tokyo 100-8280 (JP)
(72) Inventor: MIZUKAMI, Takaaki, Tokyo 100-8280 (JP); FUJITA, Shinji, Tokyo 100-8280 (JP); KANI, Yuko, Tokyo 100-8280 (JP); SASAKI, Takashi, Tokyo 100-8280 (JP); IIZUKA, Hidehiro, Tokyo 100-8280 (JP); ISHIDA, Naoyuki, Tokyo 100-8280 (JP); YASHIKI, Tatsurou, Tokyo 100-8280 (JP); WATANABE, Ayumi, Tokyo 100-8280 (JP)
(74) Representative: Mewburn Ellis LLP
(86) International application number: PCT/JP2023/027103
(87) International publication number: WO 2024/029395

(57) **Abstract**

There is provided a hydrogen supply and demand management device that is connected to a gas pipeline through which a hydrogen-containing gas is supplied and that supplies a prepared hydrogen-containing gas having a composition required by a hydrogen user, the hydrogen supply and demand management device including: piping that receives supply of the hydrogen-containing gas from the gas pipeline; a first separator that generates a high-concentration hydrogen gas from the hydrogen-containing gas; piping through which a low-concentration hydrogen gas generated in association with generation of the high-concentration hydrogen gas in the first separator is sent to the gas pipeline; piping through which the low-concentration hydrogen gas generated in association with the generation of the high-concentration hydrogen gas in the first separator is supplied to hydrogen utilization equipment of the hydrogen user; piping through which the high-concentration hydrogen gas is sent to the gas pipeline; piping through which the high-concentration hydrogen gas is supplied to the hydrogen utilization equipment; and piping through which the high-concentration hydrogen gas is supplied to the first separator. This enables high-concentration hydrogen that can be used by a hydrogen user to be obtained on the hydrogen user side, even in a case where a concentration of hydrogen contained in a hydrogen-containing gas supplied from a gas pipeline is low or unstable.

## Description

### Technical Field

The present disclosure relates to a hydrogen supply and demand management device and a hydrogen supply and demand administering device.

### Background Art

Hydrogen is a clean energy source that does not emit carbon dioxide during combustion in contrast to fossil fuels. Therefore, hydrogen has attracted attention as one type of clean energy source for global warming countermeasures, and technology development related to the production, transportation, and utilization of hydrogen has advanced.

Under such circumstances, various means for supplying, to hydrogen users, hydrogen produced by electrolysis of water using renewable energy or the like, reforming of natural gas, or the like have been studied.

For example, the Ministry of the Environment of the government of Japan started a "Demonstration project for the production of electrolytic hydrogen from renewable energy and hydrogen gas mixture supply and utilization" in 2019. This demonstration project is a demonstration project in which hydrogen produced by wind power generation is mixed with a gas containing a relatively large amount of high-heating-value components to produce a hydrogen gas mixture adjusted to have a heating value approximate to that of city gas, and the hydrogen gas mixture is supplied to and used in homes, offices, and the like. It is planned to produce a hydrogen gas mixture conforming to the city gas 13A standards specified in the Gas Business Act, supply the produced hydrogen gas mixture through gas pipes to utilization facilities installed at adjacent sites, and use the hydrogen gas mixture in a commercial gas apparatus such as a gas stove or a water heater.

PTL 1 discloses a conventional hydrogen supply system using natural gas as a fuel, the hydrogen supply system being used to electrolyze an aqueous solution of a water-soluble organic compound (for example, methanol, ethanol, or 2-propanol) to separate and generate hydrogen and carbon dioxide, separately collect the separated and generated carbon dioxide and hydrogen, and supply the hydrogen to a hydrogen-consuming apparatus, since in a case where hydrogen is produced by a steam-reforming reaction of methane which is a main component of natural gas, a problem arises in that an expensive and large-scale carbon dioxide separation and collection device is required to separate and collect carbon dioxide generated in a combustion burner for supplying heat to a reformer.

### Citation List

### Patent Literature

PTL 1: JP 2007-223860 A

### Summary of Invention

### Technical Problem

In a case where hydrogen is produced from renewable energy having an unstable amount of power generation, the amount of produced hydrogen varies depending on the amount of power generation of the renewable energy. Although the heating value of natural gas varies to some extent, hydrogen produced by renewable energy varies more greatly, and a supply amount and a heat value of city gas mixed with hydrogen vary depending on variations in amount of hydrogen production.

In addition, in a case where hydrogen is separated from the hydrogen gas mixture and used for a fuel cell, in a case where hydrogen is supplied via hydrogen transport means such as a truck to a hydrogen user that is not connected to a gas pipeline, or the like, the hydrogen concentration needs to be increased to a predetermined value or larger. Under a condition of a low output of renewable energy or the like, the concentration of hydrogen contained in the hydrogen gas mixture may be low.

An object of the present disclosure is to obtain, on a hydrogen user side, high-concentration hydrogen that can be used by the hydrogen user even in a case where a concentration of hydrogen contained in a hydrogen-containing gas supplied from a gas pipeline is low or unstable.

### Solution to Problem

A hydrogen supply and demand management device of the present disclosure is connected to a gas pipeline through which a hydrogen-containing gas is supplied and supplies a prepared hydrogen-containing gas having a composition required by a hydrogen user, the hydrogen supply and demand management device including: piping that receives supply of the hydrogen-containing gas from the gas pipeline; a first separator that generates a high-concentration hydrogen gas from the hydrogen-containing gas; piping through which a low-concentration hydrogen gas generated in association with generation of the high-concentration hydrogen gas in the first separator is sent to the gas pipeline; piping through which the low-concentration hydrogen gas generated in association with the generation of the high-concentration hydrogen gas in the first separator is supplied to hydrogen utilization equipment of the hydrogen user; piping through which the high-concentration hydrogen gas is sent to the gas pipeline; piping through which the high-concentration hydrogen gas is supplied to the hydrogen utilization equipment; and piping through which the high-concentration hydrogen gas is supplied to the first separator.

### Advantageous Effects of Invention

According to the present disclosure, high-concentration hydrogen that can be used by a hydrogen user can be obtained on a hydrogen user side, even in a case where a concentration of hydrogen contained in a hydrogen-containing gas supplied from a gas pipeline is low or unstable.

### Brief Description of Drawings

[FIG. 1] FIG. 1 is a schematic configuration diagram illustrating an overall system of hydrogen supply and demand according to the present disclosure.
[FIG. 2] FIG. 2 is a schematic configuration diagram illustrating a system of hydrogen supply and demand in a wide range according to the present disclosure.
[FIG. 3] FIG. 3 is a configuration diagram illustrating a hydrogen supply and demand management device of Example 1.
[FIG. 4] FIG. 4 is a configuration diagram illustrating a hydrogen supply and demand management device of Example 2.
[FIG. 5] FIG. 5 is a configuration diagram illustrating a hydrogen supply and demand management device of Example 3.
[FIG. 6] FIG. 6 is a configuration diagram illustrating a hydrogen supply and demand management device of Example 4.

### Description of Embodiments

The present disclosure relates to a hydrogen supply and demand management device that enables hydrogen to be supplied and consumed by a hydrogen supplier and a hydrogen user in a system in which the hydrogen supplier and the hydrogen user are connected by a gas pipeline through which a blend gas containing hydrogen is supplied. Note that, in the present specification, a network of items of equipment such as gas pipelines that supports supply and consumption of a gas such as methane for fuel is also referred to as a "gas grid".

Hereinafter, details of the present disclosure will be described with reference to the drawings. Note that the same configurations are denoted by the same reference numerals, and in a case where descriptions thereof would be repetitive, the descriptions thereof may be omitted. Note that the details of the present disclosure are not limited to the following embodiments and examples.

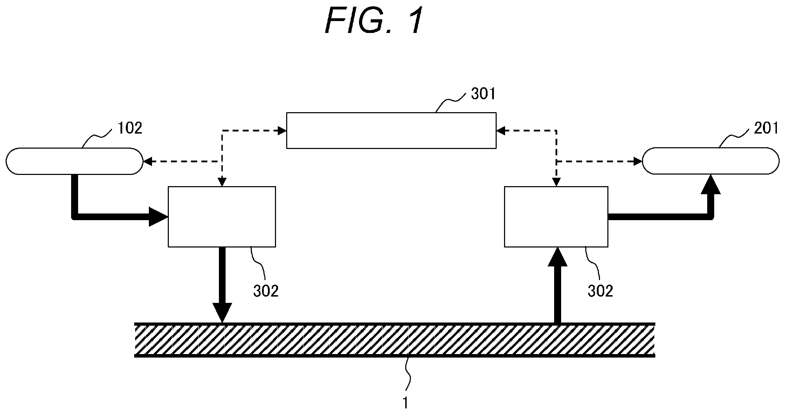

FIG. 1 is a schematic configuration diagram illustrating an overall system of hydrogen supply and demand according to the present disclosure.

A gas pipeline 1 illustrated in this drawing is a blend gas pipeline in which hydrogen is mixed with natural gas or city gas. Gas piping leading to a hydrogen supplier 102 and a hydrogen user 201 is connected to the gas pipeline 1. The hydrogen supplier 102 and the hydrogen user 201 have respective hydrogen supply and demand management devices 302. The hydrogen supply and demand management device 302 is configured to be capable of two-way communication with the hydrogen supply and demand administering device 301. Here, the blend gas obtained by mixing hydrogen with natural gas or city gas is also referred to as a "hydrogen-containing gas".

The hydrogen user 201 has equipment using hydrogen, such as a fuel cell, a combustion device, or an engine, and can extract a hydrogen-containing gas having a predetermined composition from the gas pipeline 1 via the hydrogen supply and demand management device 302. Here, the amount of hydrogen (hydrogen use amount) extracted from the gas pipeline 1 and the composition of the hydrogen-containing gas may be adjusted by the hydrogen user 201, or may be automatically adjusted in conjunction with capacity control, level control, or the like on a hydrogen use equipment side.

In addition, the hydrogen supply and demand management device 302 on the hydrogen user 201 side has data such as a hydrogen-containing gas use amount, the composition of the hydrogen-containing gas, instrument information of the method, and image information, and transmits the data to the hydrogen supply and demand administering device 301. A method of transmission may be wireless, such as with a smart meter. In addition, intervals of transmission from the hydrogen supply and demand management device 302 to the hydrogen supply and demand administering device 301 may be set to, for example, about one minute to five minutes as long as the intervals are necessary to manage supply and demand of hydrogen. In a case where data intervals are set, intervals for measuring the hydrogen use amount are preferably equal to or shorter than the transmission intervals. In addition, the data to be transmitted may be processed as an average value, a combined value, or the like.

The hydrogen supplier 102 produces hydrogen on the basis of a hydrogen supply amount received by the hydrogen supply and demand administering device 301 from the hydrogen supply and demand management device 302 or according to a supply and demand situation of electric power. Hydrogen produced by the hydrogen supplier 102 is supplied to the gas pipeline 1.

Hydrogen may be produced by any method such as a method of producing hydrogen by electrolysis of water using electric power generated by renewable energy, a method of producing hydrogen by subjecting carbon monoxide generated when coal is gasified to a shift reaction and then separating carbon dioxide, or a method of producing hydrogen by performing steam reforming on natural gas, and there is no limitation thereto. Note that, from the viewpoint of being carbon free, in a case where carbon dioxide is generated in a production process, it is preferable to prevent carbon dioxide from being released to the outside by, for example, collecting and storing carbon dioxide, converting carbon dioxide into an organic substance, or the like.

In addition, the hydrogen supply and demand management device 302 on the hydrogen supplier 102 side has data such as hydrogen production resources and the hydrogen supply amount supplied to the gas pipeline 1, and transmits the data to the hydrogen supply and demand administering device 301. Transmission intervals of the data of the hydrogen supply amount to the hydrogen supply and demand administering device 301 may be set to, for example, about one minute to five minutes as long as the intervals are required to manage supply and demand of hydrogen. In a case where data intervals are set, measurement intervals of the hydrogen use amount are preferably equal to or shorter than the transmission intervals.

The hydrogen supply and demand administering device 301 manages the data of the hydrogen use amount received from the hydrogen supply and demand management device 302 on the hydrogen user 201 side and data of the hydrogen supply amount received from the hydrogen supply and demand management device 302 on the hydrogen supplier 102 side. The hydrogen supply and demand administering device 301 may predict, by using these accumulated data, the hydrogen supply amount or may calculate a usage charge of the hydrogen user 201. For example, the hydrogen supply and demand administering device 301 includes an information acquisition unit that acquires, from sensors included in the hydrogen supply and demand management device 302, information of a hydrogen concentration and flow rate of the hydrogen-containing gas supplied to the hydrogen user 201, a component flow rate calculation unit that calculates a concentration and a flow rate of each of components constituting the hydrogen-containing gas which is supplied to the hydrogen user 201, on the basis of the acquired sensor information, a combined flow rate calculation unit that calculates a combined flow rate of all the components based on a calculation result obtained by the component flow rate calculation unit, and a charge calculation unit that calculates a gas usage charge for a certain period from market prices of all the components and the combined flow rate.

With such a configuration, it is possible to manage and operate the supply and demand of the hydrogen user 201 and the hydrogen supplier 102 connected by the gas pipeline 1.

Next, roles of the hydrogen supply and demand management device 302 will be described.

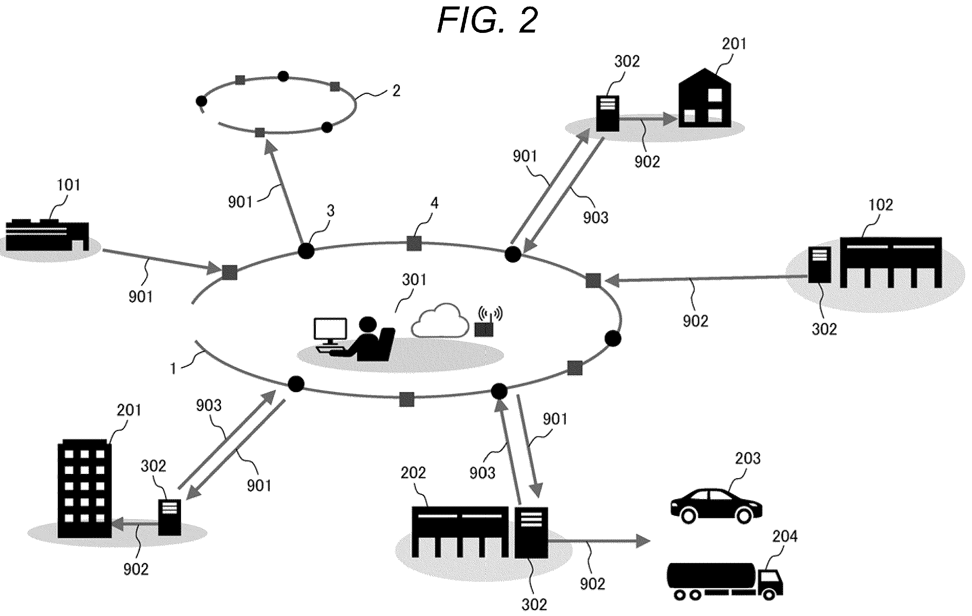

FIG. 2 is a schematic configuration diagram illustrating a system of hydrogen supply and demand in a wide range according to the present disclosure.

In this drawing, the gas pipeline 1 is connected to a gas supply starting point 101, a hydrogen supplier 102, a hydrogen user 201, a hydrogen centralized supply facility 202, or the like. The hydrogen supplier 102, the hydrogen user 201, and the hydrogen centralized supply facility 202 are connected to the gas pipeline 1 via the hydrogen supply and demand management device 302.

The gas supply starting point 101 is connected to the gas pipeline 1 via piping of a blend gas 901 through which the blend gas flows. The hydrogen supply and demand management device 302 is configured to be capable of two-way communication with the hydrogen supply and demand administering device 301. In addition, the gas pipeline 1 may also be connected to other region gas pipelines 2.

The hydrogen user 201 can suck the blend gas 901 from the gas pipeline 1, and can separate and extract a high-concentration hydrogen gas 902 (constant composition hydrogen-containing gas) using the hydrogen supply and demand management device 302, as hydrogen to be used in equipment using hydrogen, such as a fuel cell, a combustion device, or an engine. The high-concentration hydrogen gas 902 may be 100% hydrogen gas or a hydrogen-containing gas, and a composition thereof is in a predetermined range according to demand. Here, a flow rate of the high-concentration hydrogen gas 902 which is desired to be used may be adjusted by the hydrogen user 201, or may be automatically adjusted in conjunction with capacity control, level control, or the like on the hydrogen use equipment side. In addition, regarding the use of the high-concentration hydrogen gas 902, for example, the hydrogen centralized supply facility 202 may extract the high-concentration hydrogen gas 902 from the gas pipeline 1 and may supply the high-concentration hydrogen gas to a fuel cell vehicle 203 or may supply, via hydrogen transport means 204 such as a truck, the high-concentration hydrogen gas to a hydrogen user that is not connected to the gas pipeline. A return gas 903 (low-concentration hydrogen gas) obtained by separating the high-concentration hydrogen gas 902 from the blend gas 901 using the hydrogen supply and demand management device 302 is adjusted to have a temperature and pressure which enables the return gas to be returned to the gas pipeline 1, and then the return gas is returned to the gas pipeline 1. In addition, in the hydrogen supply and demand management device 302, a use amount of high-concentration hydrogen gas 902 is measured and recorded, and information thereof is transmitted to the hydrogen supply and demand administering device 301.

The hydrogen supplier 102 produces hydrogen in a hydrogen supply amount received by the hydrogen supply and demand management device 302 from the hydrogen supply and demand administering device 301, produces hydrogen in an amount according to power supply and demand, and supplies the produced hydrogen to the gas pipeline 1. Here, since the gas supply starting point 101 also supplies hydrogen, the gas supply starting point 101 may include the hydrogen supply and demand management device 302 (not illustrated). The gas supply starting point 101 also produces hydrogen on the basis of the hydrogen supply amount received from the hydrogen supply and demand administering device 301, produces hydrogen in the amount according to the power supply and demand, and supplies the produced hydrogen to the gas pipeline 1.

Hereinafter, details of the hydrogen supply and demand management device will be described.

### [Example 1]

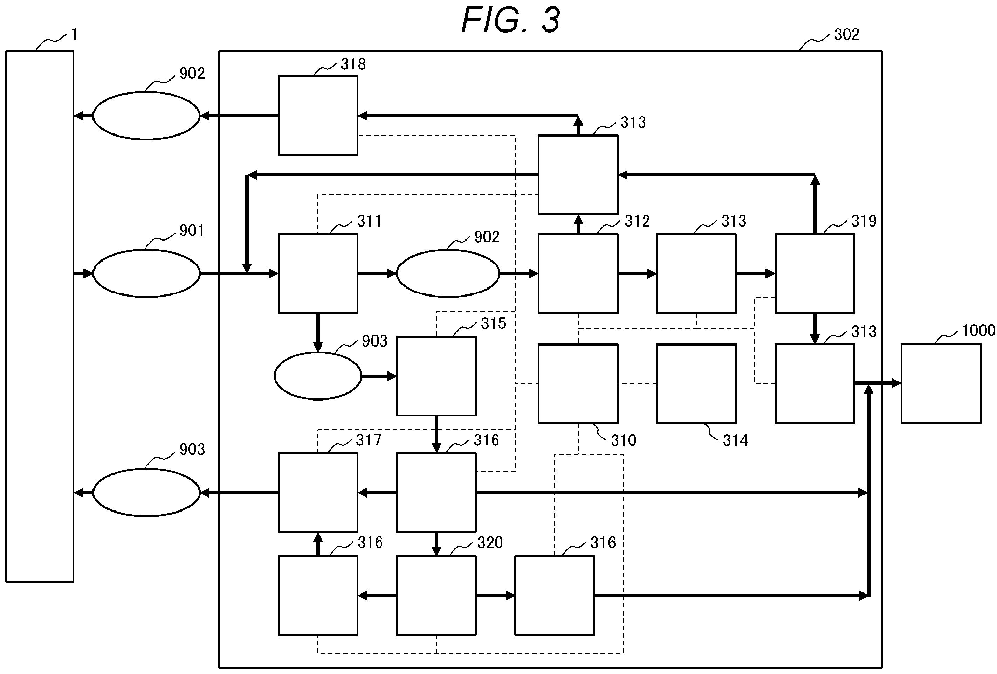

FIG. 3 is a configuration diagram illustrating a hydrogen supply and demand management device of the present example.

In this drawing, the hydrogen supply and demand management device 302 includes a device control unit 310, a hydrogen separator 311 (first separator), a high-concentration hydrogen gas composition measurement unit 312 (gas sensor), a high-concentration hydrogen gas amount measurement unit 313 (flow sensor), a data communication unit 314, a return gas composition measurement unit 315 (gas sensor), a return gas amount measurement unit 316 (flow sensor), a return gas introduction unit 317, a high-concentration hydrogen gas introduction unit 318, high-concentration hydrogen gas storage equipment 319 (high-concentration hydrogen gas storage unit), and return gas storage equipment 320 (low-concentration hydrogen gas storage unit). Piping that receives supply of the blend gas 901, piping through which the high-concentration hydrogen gas 902 is sent to the gas pipeline 1, and piping through which the return gas 903 is sent to the gas pipeline 1 are provided between the hydrogen supply and demand management device 302 and the gas pipeline 1. Piping through which the high-concentration hydrogen gas is supplied and piping through which the low-concentration hydrogen gas and the high-concentration hydrogen gas are mixed and supplied are provided between equipment 1000 and the hydrogen supply and demand management device 302 on the hydrogen user side.

In the case of supplying the blend gas 901 obtained by mixing methane gas or the like with hydrogen using an existing city gas pipeline or the like (gas grid), the hydrogen supply and demand management device 302 separates hydrogen from the blend gas 901 and sends the separated hydrogen to equipment that consumes hydrogen, and causes a remaining gas having a low hydrogen concentration as the return gas 903 to flow back to the gas grid. Further, the hydrogen supply and demand management device 302 supplies, as the high-concentration hydrogen gas 902, hydrogen generated by renewable energy or the like to the gas grid.

The present example illustrates the case of one hydrogen separator 311.

The device control unit 310 executes information aggregation and control of the entire hydrogen supply and demand management device 302. This control causes hydrogen to be supplied to the hydrogen utilization equipment 1000 owned by the hydrogen user.

Note that, the hydrogen utilization equipment 1000 is not limited to only a mechanical device, and represents a destination to which a blend gas is supplied, such as a blend gas pipeline in which hydrogen is mixed, a factory, a shopping center, and a general home. That is, the hydrogen utilization equipment 1000 corresponds to the hydrogen user 201 in FIG. 2, a device such as the hydrogen centralized supply facility 202, or the like.

The control performed by the device control unit 310 is as follows, for example.

1) The blend gas 901 is introduced from the gas pipeline 1 into the hydrogen supply and demand management device 302.
2) The blend gas 901 is separated by the hydrogen separator 311 into the high-concentration hydrogen gas 902 and the return gas 903 having a low hydrogen concentration.
3) A gas composition of the high-concentration hydrogen gas 902 is measured by the high-concentration hydrogen gas composition measurement unit 312, and a gas amount thereof is measured by the high-concentration hydrogen gas amount measurement unit 313. Thereafter, the high-concentration hydrogen gas 902 is temporarily stored in the high-concentration hydrogen gas storage equipment 319. Then, the gas amount of the high-concentration hydrogen gas 902 is measured by the high-concentration hydrogen gas amount measurement unit 313 according to demand, and the high-concentration hydrogen gas is supplied to the hydrogen utilization equipment 1000. For example, the high-concentration hydrogen gas stored in the high-concentration hydrogen gas storage equipment 319 is mixed with the high-concentration hydrogen gas supplied to the hydrogen utilization equipment 1000, and a mixture is supplied in a case where the hydrogen concentration of the high-concentration hydrogen gas supplied to the hydrogen utilization equipment 1000 is lower than a predetermined value.

In addition, the gas composition of the high-concentration hydrogen gas 902 may be measured by the high-concentration hydrogen gas composition measurement unit 312, then the high-concentration hydrogen gas may be measured by the high-concentration hydrogen gas amount measurement unit 313 without being sent to the high-concentration hydrogen gas storage equipment 319, and then the high-concentration hydrogen gas 902 may be supplied to an inlet of the hydrogen separator 311. Here, in the high-concentration hydrogen gas amount measurement unit 313, a gas amount required to adjust the concentration of the high-concentration hydrogen gas 902 is calculated.

In addition, the high-concentration hydrogen gas 902 stored in the high-concentration hydrogen gas storage equipment 319 may be measured by the high-concentration hydrogen gas composition measurement unit 312 and the high-concentration hydrogen gas amount measurement unit 313, and then may be supplied to the inlet of the hydrogen separator 311. For example, in a case where the hydrogen concentration of the hydrogen-containing gas supplied from the gas pipeline 1 is lower than a reference concentration, the hydrogen concentration can be increased by re-supplying the high-concentration hydrogen gas stored in the high-concentration hydrogen gas storage equipment 319 to the hydrogen separator 311.

In order to separate hydrogen from the blend gas 901, the hydrogen separator 311 includes at least one separation mechanism of various methods such as a hydrogen separation membrane method, pressure swing adsorption (PSA), and temperature swing adsorption (TSA). The hydrogen separator 311 may include a plurality of hydrogen separation membranes having different hydrogen separation coefficients, respectively.

Further, the hydrogen separator 311 desirably includes a mechanism that performs pressurization, depressurization, heating, cooling, and the like to satisfy conditions (temperature, pressure, and the like) suitable for the separation method.

4) A gas composition of the return gas 903 is measured by the return gas composition measurement unit 315, and a gas amount thereof is measured by the return gas amount measurement unit 316. Thereafter, the return gas is returned to the gas pipeline 1 after the temperature, the pressure, the flow velocity, or the like of the return gas is adjusted by the return gas introduction unit 317.

In addition, the return gas 903 may be supplied to the hydrogen utilization equipment 1000 after the gas amount thereof is measured by the return gas amount measurement unit 316. In this case, the return gas 903 may be mixed with the high-concentration hydrogen gas 902, adjusted to a hydrogen concentration of a specification required in the hydrogen utilization equipment 1000, and supplied to the hydrogen utilization equipment 1000.

In addition, the return gas 903 may be temporarily stored in the return gas storage equipment 320 after the gas amount thereof is measured by the return gas amount measurement unit 316. In this case, thereafter, the gas amount of the return gas 903 may be measured by the return gas amount measurement unit 316 according to demand, and supplied to the hydrogen utilization equipment 1000. For example, in a case where the hydrogen concentration of the high-concentration hydrogen gas supplied to the hydrogen utilization equipment 1000 is higher than a predetermined value, control is performed to mix the low-concentration hydrogen gas of the return gas storage equipment 320 with the high-concentration hydrogen gas supplied to the hydrogen utilization equipment 1000. In addition, in a case where the hydrogen concentration of the high-concentration hydrogen gas supplied to the hydrogen utilization equipment 1000 is higher than the predetermined value, the hydrogen-containing gas supplied from the gas pipeline 1 may be mixed with the high-concentration hydrogen gas supplied to the hydrogen utilization equipment 1000 and supplied.

As described above, in the hydrogen supply and demand management device 302, the prepared hydrogen-containing gas having a composition required by the hydrogen user is supplied to the hydrogen utilization equipment 1000. In other words, the prepared hydrogen-containing gas is a gas obtained by mixing the high-concentration hydrogen gas and the low-concentration hydrogen gas to have the hydrogen concentration desired by the hydrogen user.

5) Data such as the composition or the flow rate of the high-concentration hydrogen gas, the composition or the flow rate of the return gas, device information, or an image is aggregated in the device control unit 310. These items of data are sent from the device control unit 310 through the data communication unit 314 to the hydrogen supply and demand administering device 301.

As described above, the high-concentration hydrogen gas 902 separated in the hydrogen separator 311 can be temporarily stored in the high-concentration hydrogen gas storage equipment 319 and then re-supplied to the hydrogen separator 311, so that it is possible to obtain high-concentration hydrogen even in a case where the hydrogen concentration of hydrogen contained in the gas pipeline 1 is low, and a hydrogen concentration control range of the hydrogen supply and demand management device 302 can be widened.

### [Example 2]

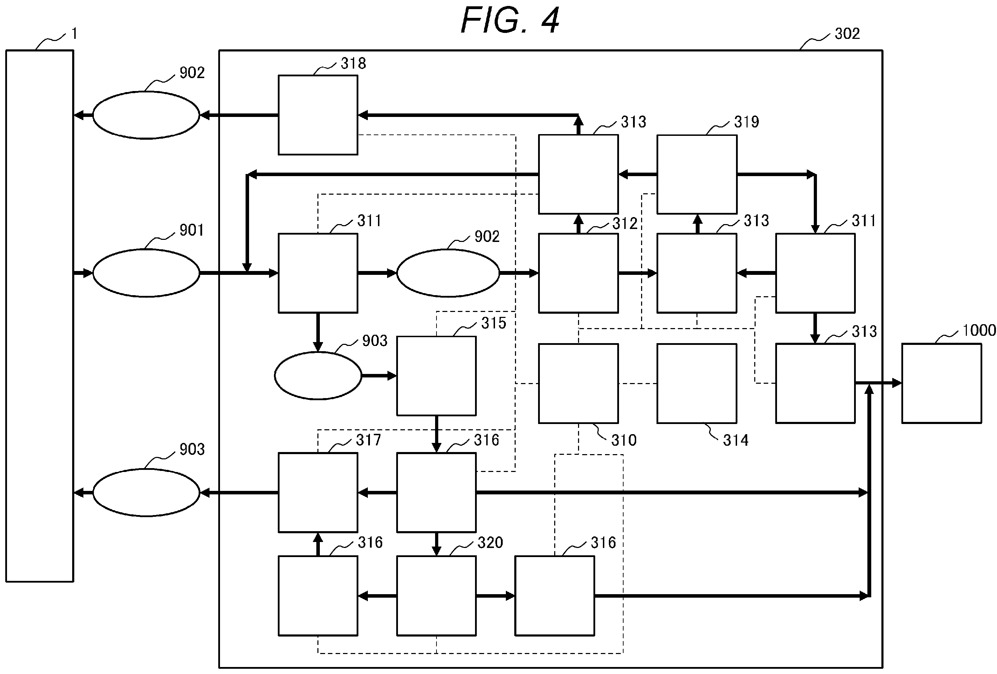

FIG. 4 is a configuration diagram illustrating a hydrogen supply and demand management device having a configuration in which hydrogen separators are connected in multiple stages.

Hereinafter, only differences from FIG. 3 will be described.

In the present example, the case of two hydrogen separators 311 is illustrated. The two hydrogen separators 311 may perform separation by the same method or respective different methods. In addition, the present example may have a configuration in which the high-concentration hydrogen gas 902 flows back to one hydrogen separator 311 to further increase the hydrogen concentration. In the present specification, the second hydrogen separator 311 is referred to as a "second separator".

In FIG. 4, the gas temporarily stored in the high-concentration hydrogen gas storage equipment 319 is supplied to the hydrogen separator 311, and the hydrogen concentration of the high-concentration hydrogen gas 902 is further increased. Then, the gas is stored again in the high-concentration hydrogen gas storage equipment 319. Consequently, even in a case where the hydrogen concentration of hydrogen contained in the gas pipeline 1 is low, it is possible to obtain high-concentration hydrogen, and the hydrogen concentration control range of the hydrogen supply and demand management device 302 can be widened.

Further, by applying a hydrogen adsorption separation method such as pressure swing adsorption (PSA) or temperature swing adsorption (TSA) to the hydrogen separator 311 in the subsequent stage, it is possible to extract ultra high purity hydrogen at a level of 99.9998% that can be directly supplied to the fuel cell vehicle.

### [Example 3]

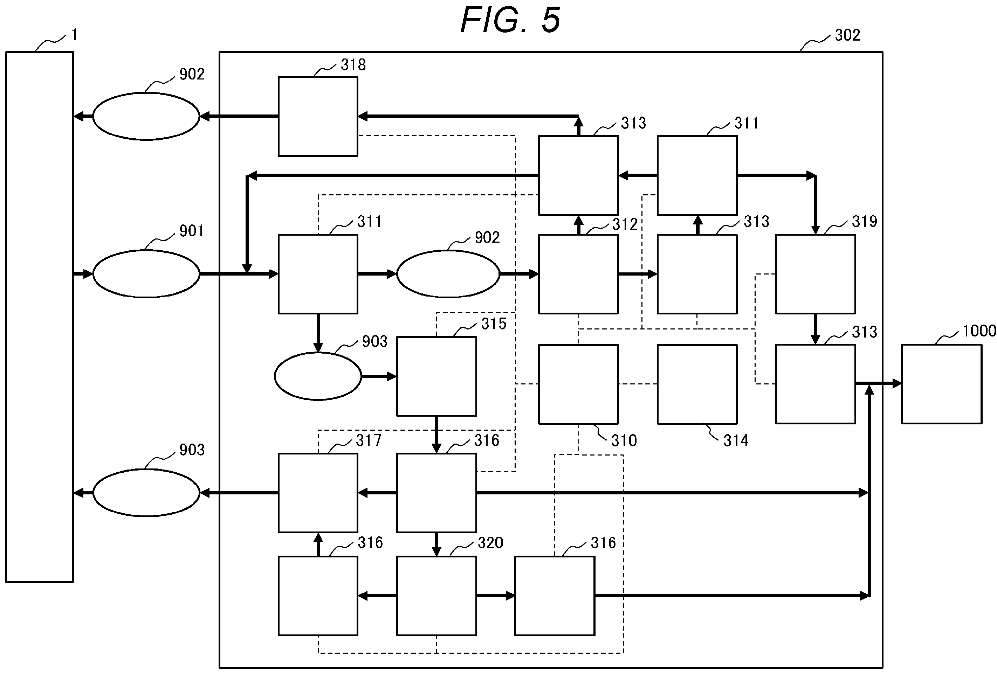

FIG. 5 is a configuration diagram illustrating another example of the hydrogen supply and demand management device having a configuration in which hydrogen separators are connected in multiple stages.

Hereinafter, only differences from FIG. 4 will be described.

In FIG. 5, the high-concentration hydrogen gas 902 separated in the hydrogen separator 311 is sent to the hydrogen separator 311 in the subsequent stage, and the hydrogen concentration of the high-concentration hydrogen gas 902 is further increased. Thereafter, the high-concentration hydrogen gas is stored in the high-concentration hydrogen gas storage equipment 319 in order. Consequently, even in a case where the hydrogen concentration of hydrogen contained in the gas pipeline 1 is low, it is possible to obtain high-concentration hydrogen, and the hydrogen concentration control range of the hydrogen supply and demand management device 302 can be widened.

### [Example 4]

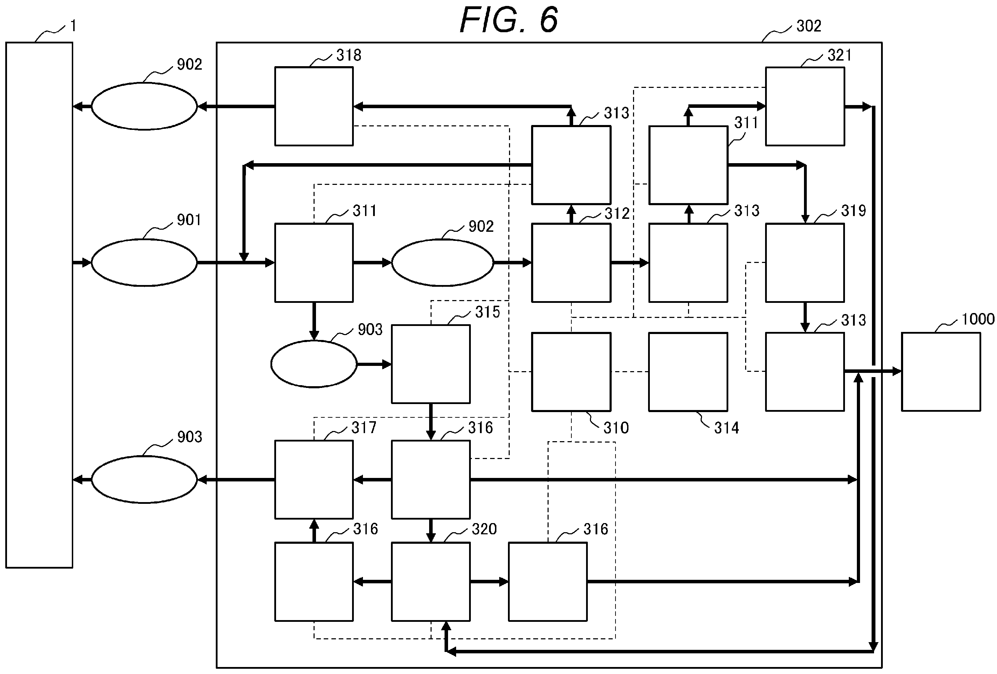

FIG. 6 is a configuration diagram illustrating another example of the hydrogen supply and demand management device having a configuration in which hydrogen separators are connected in multiple stages.

Hereinafter, only differences from FIG. 5 will be described.

In FIG. 6, when a hydrogen adsorption separation method such as pressure swing adsorption (PSA) or temperature swing adsorption (TSA) is applied to the hydrogen separator 311 in the subsequent stage, it is possible to extract ultra high purity hydrogen at a level of 99.9998% that can be directly supplied to the fuel cell vehicle.

Note that, as illustrated in this drawing, the gas amount of low-concentration hydrogen gas obtained by the hydrogen separator 311 at the subsequent stage is measured by the low-concentration hydrogen gas amount measurement unit 321, and the low-concentration hydrogen gas is sent to the return gas storage equipment 320.

Hereinafter, desirable embodiments of the hydrogen supply and demand management device according to the present disclosure will be collectively described.

The hydrogen supply and demand management device further includes the high-concentration hydrogen gas storage unit that stores the high-concentration hydrogen gas generated in the first separator, or the low-concentration hydrogen gas storage unit that stores the low-concentration hydrogen gas generated in association with the generation of the high-concentration hydrogen gas in the first separator.

The hydrogen supply and demand management device is configured to be capable of two-way communication with a hydrogen supply and demand administering device provided outside.

The hydrogen supply and demand management device further includes at least one of a gas sensor that measures a hydrogen concentration of at least one of the high-concentration hydrogen gas and the low-concentration hydrogen gas and a flow sensor that measures a flow rate of at least one of the high-concentration hydrogen gas and the low-concentration hydrogen gas.

The low-concentration hydrogen gas and the high-concentration hydrogen gas are mixed and supplied to the hydrogen utilization equipment.

The hydrogen supply and demand management device further includes the second separator that increases a hydrogen concentration of a gas flowing inside, and the piping through which the high-concentration hydrogen gas stored in the high-concentration hydrogen gas storage unit or the high-concentration hydrogen gas generated in the first separator is supplied to the second separator.

The second separator includes a pressure swing absorption separator or a temperature swing absorption separator.

The device control unit is further provided, and the device control unit controls hydrogen concentrations of the high-concentration hydrogen gas and the low-concentration hydrogen gas using data of the gas sensor and the flow sensor.

The device control unit supplies the high-concentration hydrogen gas from the high-concentration hydrogen gas storage unit to the first separator in a case where the hydrogen concentration of the hydrogen-containing gas supplied from the gas pipeline is lower than a reference concentration.

The device control unit mixes the high-concentration hydrogen gas stored in the high-concentration hydrogen gas storage unit with the high-concentration hydrogen gas supplied to the hydrogen utilization equipment in a case where the hydrogen concentration of the high-concentration hydrogen gas supplied to the hydrogen utilization equipment is lower than a predetermined value.

The device control unit mixes the low-concentration hydrogen gas in the low-concentration hydrogen gas storage unit with the high-concentration hydrogen gas supplied to the hydrogen utilization equipment in a case where the hydrogen concentration of the high-concentration hydrogen gas supplied to the hydrogen utilization equipment is higher than a predetermined value.

The device control unit mixes the hydrogen-containing gas supplied from the gas pipeline with the high-concentration hydrogen gas supplied to the hydrogen utilization equipment in a case where the hydrogen concentration of the high-concentration hydrogen gas supplied to the hydrogen utilization equipment is higher than a predetermined value.

The first separator includes a hydrogen separation membrane.

The first separator includes a plurality of hydrogen separation membranes having respective different hydrogen separation coefficients.

### Reference Signs List

- 1: gas pipeline
- 2: other region gas pipeline
- 3: gas pipeline divergence point
- 4: gas pipeline convergence point
- 101: gas supply starting point
- 102: hydrogen supplier
- 201: hydrogen user
- 202: hydrogen centralized supply facility
- 203: fuel cell vehicle
- 204: hydrogen transport means
- 301: hydrogen supply and demand administering device
- 302: hydrogen supply and demand management device
- 310: device control unit
- 311: hydrogen separator
- 312: high-concentration hydrogen gas composition measurement unit
- 313: high-concentration hydrogen gas amount measurement unit
- 314: data communication unit
- 315: return gas composition measurement unit
- 316: return gas amount measurement unit
- 317: return gas introduction unit
- 318: high-concentration hydrogen gas introduction unit
- 319: high-concentration hydrogen gas storage equipment
- 320: return gas storage equipment
- 321: low-concentration hydrogen gas amount measurement unit
- 901: blend gas
- 902: high-concentration hydrogen gas
- 903: return gas
- 1000: hydrogen utilization equipment

## Claims

1. A hydrogen supply and demand management device that is connected to a gas pipeline through which a hydrogen-containing gas is supplied and that supplies a prepared hydrogen-containing gas having a composition required by a hydrogen user, the hydrogen supply and demand management device comprising:
piping that receives supply of the hydrogen-containing gas from the gas pipeline;
a first separator that generates a high-concentration hydrogen gas from the hydrogen-containing gas;
piping through which a low-concentration hydrogen gas generated in association with generation of the high-concentration hydrogen gas in the first separator is sent to the gas pipeline;
piping through which the low-concentration hydrogen gas generated in association with the generation of the high-concentration hydrogen gas in the first separator is supplied to hydrogen utilization equipment of the hydrogen user;
piping through which the high-concentration hydrogen gas is sent to the gas pipeline;
piping through which the high-concentration hydrogen gas is supplied to the hydrogen utilization equipment; and
piping through which the high-concentration hydrogen gas is supplied to the first separator.

2. The hydrogen supply and demand management device according to claim 1, further comprising a high-concentration hydrogen gas storage unit that stores the high-concentration hydrogen gas generated in the first separator, or a low-concentration hydrogen gas storage unit that stores the low-concentration hydrogen gas generated in association with the generation of the high-concentration hydrogen gas in the first separator.

3. The hydrogen supply and demand management device according to claim 2, wherein the hydrogen supply and demand management device is configured to be capable of two-way communication with a hydrogen supply and demand administering device provided outside.

4. The hydrogen supply and demand management device according to claim 2, further comprising at least one of a gas sensor that measures a hydrogen concentration of at least one of the high-concentration hydrogen gas and the low-concentration hydrogen gas and a flow sensor that measures a flow rate of at least one of the high-concentration hydrogen gas and the low-concentration hydrogen gas.

5. The hydrogen supply and demand management device according to claim 2, wherein the low-concentration hydrogen gas and the high-concentration hydrogen gas are mixed and supplied to the hydrogen utilization equipment.

6. The hydrogen supply and demand management device according to claim 2, further comprising:
a second separator that increases a hydrogen concentration of a gas flowing inside; and
piping through which the high-concentration hydrogen gas stored in the high-concentration hydrogen gas storage unit or the high-concentration hydrogen gas generated in the first separator is supplied to the second separator.

7. The hydrogen supply and demand management device according to claim 6, wherein the second separator includes a pressure swing absorption separator or a temperature swing absorption separator.

8. The hydrogen supply and demand management device according to claim 4, further comprising a device control unit,
wherein the device control unit controls hydrogen concentrations of the high-concentration hydrogen gas and the low-concentration hydrogen gas using data of the gas sensor and the flow sensor.

9. The hydrogen supply and demand management device according to claim 8, wherein the device control unit supplies the high-concentration hydrogen gas from the high-concentration hydrogen gas storage unit to the first separator in a case where the hydrogen concentration of the hydrogen-containing gas supplied from the gas pipeline is lower than a reference concentration.

10. The hydrogen supply and demand management device according to claim 8, wherein the device control unit mixes the high-concentration hydrogen gas stored in the high-concentration hydrogen gas storage unit with the high-concentration hydrogen gas supplied to the hydrogen utilization equipment in a case where the hydrogen concentration of the high-concentration hydrogen gas supplied to the hydrogen utilization equipment is lower than a predetermined value.

11. The hydrogen supply and demand management device according to claim 8, wherein the device control unit mixes the low-concentration hydrogen gas in the low-concentration hydrogen gas storage unit with the high-concentration hydrogen gas supplied to the hydrogen utilization equipment in a case where the hydrogen concentration of the high-concentration hydrogen gas supplied to the hydrogen utilization equipment is higher than a predetermined value.

12. The hydrogen supply and demand management device according to claim 8, wherein the device control unit mixes the hydrogen-containing gas supplied from the gas pipeline with the high-concentration hydrogen gas supplied to the hydrogen utilization equipment in a case where the hydrogen concentration of the high-concentration hydrogen gas supplied to the hydrogen utilization equipment is higher than a predetermined value.

13. The hydrogen supply and demand management device according to claim 2, wherein the first separator includes a hydrogen separation membrane.

14. The hydrogen supply and demand management device according to claim 2, wherein the first separator includes a plurality of hydrogen separation membranes having respective different hydrogen separation coefficients.

15. A hydrogen supply and demand administering device comprising:
an information acquisition unit that acquires data of the gas sensor and the flow sensor included in the hydrogen supply and demand management device according to any one of claims 8 to 12;
a component flow rate calculation unit that calculates a concentration and a flow rate of each of components constituting the hydrogen-containing gas which is supplied to the hydrogen user, by using the data of the gas sensor and the flow sensor acquired by the information acquisition unit;
a combined flow rate calculation unit that calculates a combined flow rate of all the components based on a calculation result obtained by the component flow rate calculation unit; and
a charge calculation unit that calculates a gas usage charge for a certain period from market prices of all the components and the combined flow rate.
